# EUROPEAN PATENT APPLICATION

(11) **EP 3 477 259 A1**
(43) Date of publication of application: **01.05.2019**
(21) Application number: 17198180.6
(22) Date of filing: 25.10.2017
(51) Int. Cl.: G01C 21/34, G01C 21/32, G05D 1/02

(54) **METHOD AND SYSTEM FOR ESTIMATING QUALITY OF MEASURING RESULTS OF ONE OF MORE SENSORS MOUNTED ON A MOBILE PLATFORM**

(71) Applicant: Honda Research Institute Europe GmbH, 63073 Offenbach/Main (DE)
(72) Inventor: WEISSWANGE, Thomas, 63073 Offenbach/Main (DE)
(74) Representative: Beder, Jens

(57) **Abstract**

The invention regards a system and a method for estimating quality of measuring results of one or more sensors mounted on a mobile platform (1). First, a future path of travel of the mobile platform (1) is determined and limitations for sensing that the sensors (2) would encounter when traveling along the determined future path are determined based on map information (4.1). A quality estimate is then assigned to the future path indicating the quality of the measuring result and the quality estimate is output for further processing, in particular by a navigation route planning unit (3.4) as an input parameter for route calculation.

## Description

The invention relates to a method and system for estimating the expected quality of measuring results of one or more sensors that are mounted on a mobile platform, in particular a vehicle in a number of given locations.

On today's vehicles, quite a number of different sensors are mounted that sense the environment of the vehicle in order to provide driver assistance systems or navigation systems with information needed to suitably perform their respective tasks. Obviously, the performance of driver assistance systems is highly dependent on the quality of the sensor values. For example, in case that erroneous measurements are performed by the sensors, such wrong measurement values can lead to a misinterpretation of a situation by the respective driver assistance unit. Of course, redundancy of measurements may reduce the frequency of wrong measurement results, but up to now, there is no opportunity to know in advance how good the performance of any such driver assistance system will be for a future travel path.

On the other side, more and more attempts are made to fully autonomous driving. For fully autonomous driving there exist two different approaches: On the one side, there is an approach, which relies basically on map data only and uses a highly precise positioning of the vehicle and aligning the vehicle position with the map that comprises very detailed data about road surfaces and infrastructure elements, for example. Alternatively, autonomous driving is performed by analyzing sensor outputs. The latter approach gives the particular advantage that changes in the environment (e.g. through parking vehicles, constructions sides, ...) of the vehicle may be correctly interpreted. Contrary, the map based approach may only take into consideration permanent elements in the environment of the vehicle. In both cases sensor output is additionally needed to react to dynamic elements like traffic.

Obviously, also for autonomous driving, it would be desirable if in advance the performance of sensors on which such automated driving relies for potential future paths (routes) could be judged while planning a route on which the autonomous driving shall be executed, to prevent wrong maneuvers or abortions of the autonomous mode.

Thus, it is a target of the present invention to be in a position to judge the expected performance of the onboard sensors of a mobile platform on a given route in order to draw the corrected conclusions with respect to performance and/or reliability of assistance by a driver assistance system or improve selection of a navigation route on which autonomous driving or at least assisted driving shall be performed.

This target is achieved by the method and system according to the independent claims.

In the present invention, for estimating quality of measuring results of one or more sensors mounted on a mobile platform, at first a future path of travel of the mobile platform is determined. Such future path is at least a section ahead of the mobile platform in its driving direction that needs to be considered for assistance systems, such as for example lane change assistance, adaptive cruise control or the like. But the future path may also be a section of an entire potential route, which is planned by a navigation system. In either case, it is desired to learn to which extent the sensors that are mounted on the mobile platform may perform their tasks sufficiently such that further processing of the delivered sensor values can be considered useful for either the assistance system or autonomous driving. In general, the invention is applicable to any sensor or set of sensors that are mounted on a mobile platform, but of course, one preferred example is a vehicle.

After such future path has been determined, the limitations for sensing that the sensors would encounter when traveling along the determined future path is determined and for such determination, information stored in a map used. The limitations are a subjective judgement, which can be made for example by making use of thresholds that compare an expected error rate of the sensor or an expected reduced sensor range with an assumed optimal performance of the sensor. It is a measure for a reduction of performance of the sensor due to environmental influences information which is stored in the map. The map thus gives the necessary information for determining such limitations. For example, the map includes enhanced information so that for the determined future path it can be determined whether an occlusion of a relevant area will occur so that the sensor might not deliver information in its entire nominal field of view. When the limitations for the sensors are determined for the future path, a quality estimate is assigned to this future path. Of course, the path can be sectioned into short sections and granularities of such sections determine how coarse or detailed an estimation may be. The quality estimate indicates the expected quality of measuring results along the future path and may, in the simplest form, be "sufficient" or "not sufficient", meaning that the sensor result can be used for further processing or that the quality or reliability of the sensor result is so bad that further processing this sensor value will not lead to an acceptable result of the driver assistance system. Of course, the quality estimate may also be a continuous value.

Finally, the quality estimate is output for further processing. It is to be noted that the quality estimate may either be output individually for any of the sensors that are mounted in the mobile platform, for one or more specific groups of sensors that are used for example for the same driver assistance system only in combination, or for all sensors that are used in any of the driver assistance systems of the mobile platform. The corresponding system, which is configured to perform the method as explained above includes as least one sensor and a processor configured to execute the respective method steps.

The advantage of the inventive approach is that when the map includes information that are suitable to predict whether a sensor is able to provide reasonable measurement results when traversing a given part of the environment, the operator of the vehicle can be informed about the expected reliability or availability of a driver assistance system and/or route planning can select a route which is optimized accordingly. Thus, having information about such sensing quality, one is able to judge whether based on the sensor results reasonable assistance for the driver or autonomous driving can be performed. Examples that reduce the quality of the sensor output are for example objects that restrict a camera sensor's field of view or metallic objects in proximity to a radar sensor that may call false detections. A LIDAR sensor on the other side might hit the road in a close distance with all its beams when approaching a road bump, hill or the like. If then, in known system without sensor limitation prediction, no redundancy measurement is performed, it is not possible to recognize that measurements performed are not reliable enough for further processing. In the present invention, it is already possible in advance to analyze whether the performance of the driver assistance system, which includes systems that autonomously take over at least part of an operation of a driver like for example an adaptive cruise control (partial autonomous driving), but also fully automated driving may be performed satisfyingly.

Advantageous embodiments are defined in the subclaims.

It is in particular preferred that the assigned quality estimate is further processed by a navigation system by basing calculation of a route on the quality estimate. Including the quality estimate into the calculation of a route allows to define it as a criterium for route calculation that availability of driver assistance systems or autonomous driving is given at least for a certain percentage of the entire distance of the route, for example. It is further preferred that route calculation is optimized with respect to at least one of a plurality of parameters. Such parameters may be for example minimum sensor limitations, expected availability of driver assistance system(s) and/or automated driving, expected failure probability of driver assistance systems and/or automated driving and expected quality of driver assistance systems and/or automated driving. These parameters may be used upon input from a user, who defines which parameters shall be used for calculating a route for navigation. The parameters may also be preset by the system developers and may be unchangeable for an operator of the mobile platform, for example the vehicle. As mentioned above, the quality estimate is calculated for a future path having a certain length. Of course, when the route calculation is performed a plurality of such future paths as sections of the entire potential route are determined and for each of such sections the quality estimate is assigned. Using the parameter minimal sensor limitation for example cumulated over an entire length of the potential route will then allow to a select a route, which leads to the best sensor performance and thus the best performance of the used or desired driver assistance system. The calculation of the route can also be based on the availability of the driver assistance system and/or automated driving rather than the sensor limitations itself, which means that based on the expected sensor quality, the system performance is calculated.

Up to now, it was known only that the routing preferences of an operator of a vehicle are set upon input of the operator of the vehicle to one of: shortest distance, shortest duration, fuel consumption, beauty of the route, and the like. According to one preferred embodiment, it is now possible to combine such user set preferences with one of the parameters or with a combination of the parameters as mentioned above. By weighting of the parameters and the set user preferences, it can be individually determined to what extent the parameters that are based on the quality estimate or the user preferences shall influence the calculation of the finally suggested route. The weighting can be set for example by using a kind of slider or inputting a percentage for taking account of the quality estimate.

As mentioned above, the quality estimate is determined and assigned to a future path, which may be a section of a route to be calculated based on map information. This map information particularly includes at least one of 3-D environment shape, annotated labels, information on sensor perception collected by other vehicles at previous traversals of that section, information on driver assistance system's and/or automated driver system's performance collected during previous transition of the mobile platform on at least a section of the future path. 3-D environment shape may for example include point clouds or object boxes. The information on the environment in 3-D includes for example buildings and other large occluders, but also vegetation. Basically, 3-D environment shapes may include information about any static object that might have an influence on the output of a sensor and measurement of the environment of a vehicle by for example limiting the field of view or range of the sensor. The annotated labels on the other side can include information that indirectly indicate or influence a possible performance of a sensor. Such label can for example indicate a surface as being reflective or transparent, which causes errors in case of for example radar sensor measurement. Other annotated labels may for example indicate the quality of road markings, water, complex sign/signal set-ups or the like. Such labels may particularly be important in case that the sensor is a camera sensor and that the sensing result is based on image processing. On the other side, the annotated labels may also be filled with information that come from real field of view or perception quality of a recording vehicle with similar sensor set-ups. This means that data is collected from other vehicles with similar sensor set-ups and is added to the map in order to be available for further estimation of a quality value. It is also possible to include information on assistance performance or availability of a driver assistance system, which can also be denoted as partial automated driving system, from previous transitions of the mobile platform on the respective path.

The determination of the limitation of a sensor preferably is measured as one of: fraction of occluded area within a perception range of sensor, minimum effective sensor range over a certain angle spectrum, expected number of missed-detections, expected number of miss-detection, signal-to-noise-ratio, size and/or number of problematic areas, a minimum number of sensors able to see any area. It is in particular preferred to compute the limitations by means of a machine learning method using the map information as an input.

It is further preferred that based on the output quality estimate at least one of expected availability, quality and failure of a driver assistance system is calculated. This can either be done directly on the basis of the output quality measures, which is determined during traveling of the mobile platform, but it can also be based on the quality estimate being stored for each potential future path associated with the map data.

The sensors that are used on such mobile platform in particular comprise one or more sensors of the group comprising: a camera, a radar sensor, a LIDAR sensor, a time-off-flight sensor, an ultrasonic sensor, GNSS receiver (Global Navigation Satellite System) and car2X radio device (antenna).

Details and aspects of the present invention will become apparent from the explanations of preferred embodiments, which are illustrated in the annexed drawings.
- Figure 1: shows a block diagram to illustrate the system of the present invention and to explain the cooperation of the elements of the system;
- Figure 2: shows schematic of a portion of a map to show information and their usage to calculate a route towards a destination,
- Figure 3(a), (b): is a schematic illustration to show limitations of a camera sensor due to occlusion,
- Figure 4: shows a second example for sensor limitation due to environment objects,
- Figure 5: shows a third example for limitation of sensor performance,
- Figure 6: shows a first flowchart to explain generation of a quality estimate according to the present invention, and
- Figure 7: shows a second flowchart explaining route planning with weighted parameters and preferences.

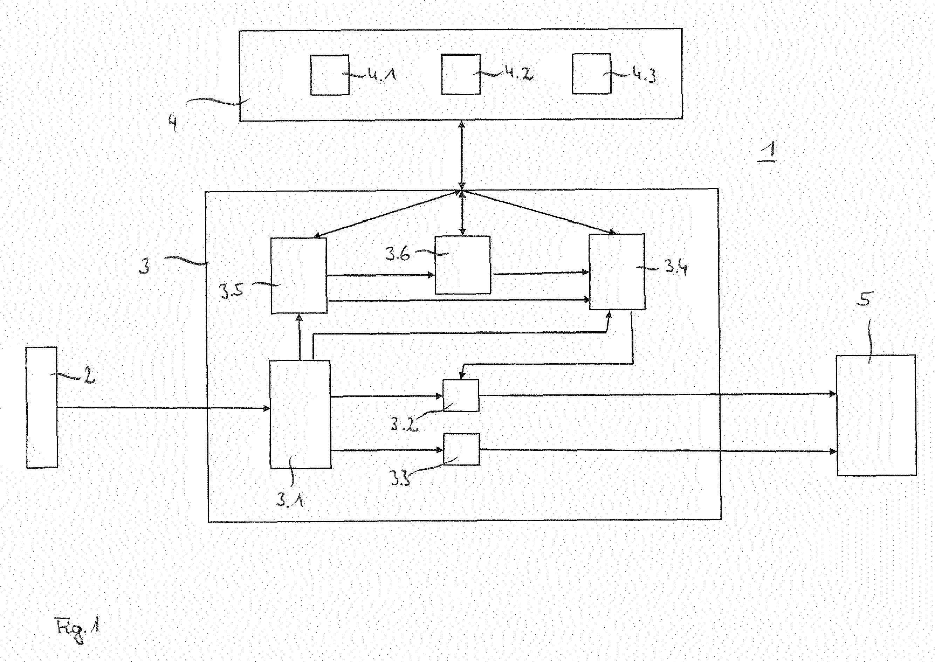

Figure 1 gives an overview over the system according to the present invention. Mounted on a mobile platform, in the illustrated embodiment, a vehicle 1 is a set of sensors 2, which may comprise plurality of sensors that may be of a same kind and distributed over the vehicle or comprise sensors of different kinds. Examples for such sensors are a camera sensor, radar, LIDAR, time-of-light sensors, ultrasonic sensors, GNSS receiver, car2X radio device and so on. The sensors 2 physically sense the environment of the vehicle 1, which will in the following be used as the most prominent example for a mobile platform. All these sensors 2 are connected to a processor 3. The processor 3 may either be a single processor performing all the different algorithms as explained in the following or may be comprised by a plurality of individual connected processors each dedicated for one or more of the algorithms. The sensors 2 provide the processor 3 with their measuring results and in the processor 3, the measuring results are further processed.

The processor 3 is furthermore connected to a memory 4. The memory 4 may hold information used for processing of the sensor data or for calculating a route and, according to the invention, a quality estimate as will be explained below. On the other side, information that results from processing of data in processor 3 can be stored in the memory 4. The memory 4 in the preferred embodiment includes map data 4.1, sensor set up information 4.2 and pAD system specification information. pAD stands for partial autonomous driving and as such may comprise advanced driver assistance systems, which are mentioned above. In the following, the terms pAD and advance driver assistance system are used synonymously.

Finally, the vehicle comprises actuators 5, which are controlled by output values or output signals of processor 3. The actuators 5, which are not further detailed and which are per se known in the art, are suitable in the execute signals, which are output as a result of the processing of sensor information and/or map information. Such actuators 5 may in particular comprise any actuation modules for taking over operation of the vehicle 1 such as throttle control, steering control, brake control, but also warning lamps or voice output in order to inform an operator of the vehicle. The sensors 2 are connected with a sensor value processing unit 3.1 of processor 3, in which the raw data that are delivered from the sensors 2 are processed so that further processing can be performed on the resulting data. The resulting processed sensor data is provided to an autonomous driving control unit 3.2 and a partial autonomous driving unit 3.3. In the autonomous driving unit 3.2 the sensor signals 2 are processed to output control signals based on which the actuators 5 are controlled such that an input destination can be reached by fully automatic driving. The autonomous driving unit 3.2 furthermore receives information about a route that is calculated to reach the destination from a navigation route planning unit 3.4.

As it will be described later, the navigation planning unit 3.4 is capable of making use of a quality estimate of the sensors for a particular road or travel path, which gives an indication about usefulness of one specific sensor, a plurality of sensors or the entirety of sensors 2 mounted on the vehicle 1 for being processed successfully in the autonomous driving unit 3.2.

The sensor value processing of the sensor value processing unit 3.2 also provides position information, which is provided to the navigation planning unit 3.4, but also to a sensor limit estimation unit 3.5. A quality estimate, which is determined in the sensor limitation estimation unit 3.5 can thus be associated with a current position and information on the limits of one or more sensors can then be stored in the memory 4. By doing so, each time the vehicle 1 is traveling along roads that are noted in a map 4.1, information about usefulness of one or more of the sensors mounted in the vehicle 1 can be collected. This additional information can be used to enhance map information.

The sensor limitation estimation unit 3.5 is also connected to a pAD/AD limitation estimation unit 3.6. Once, the limitation that sensors 2 would encounter while traveling along a future path of vehicle 1, in the pAD/AD limitation estimation unit 3.6, the resulting performance of the automated driving or the partial automated driving can be estimated. Information on such estimation is provided to the navigation route planning unit 3.4 which is then capable of taking into consideration such limitations on specific roads for example, or future paths of a vehicle 1 in general, when calculating the best route for reaching an input target.

In the sensor limitation estimation unit 3.5, information stored in the memory is used. The memory holds information about a sensor setup 4.2. The sensor setup 4.2 includes information about the characteristics of at least some of the sensors 2. Thus, having knowledge about the specification of a sensor 2, the sensor limitation estimation unit 3.5 can determine the limitations for sensing with respect to a given future path of the vehicle 1 and thus the sensor 2. Thus, the sensor limitation estimation unit 3.5 determines a future (potential) path of travel of the vehicle 1 and for this future path of travel a measure is determined that indicates the suitability of the sensor output. In case that for example the sensor according to its specification has a certain sensor range and field of view, occluding objects may reduce the range and/or field of view. For a determined future path of travel, the virtual position of the sensors 2 is known and taking into consideration information on presence of occluders extracted from map 4.1 along the future path such limitations can be determined. In particular, a fraction of occluded areas within a range can be determined, but it is evident that other aspects of sensing an environment may also be used for describing the sensor limitations. Examples are a minimum effective sensor range over a certain angle spectrum, an expected number of missed-detections, an expected number of miss-detections, signal-to-noise ratio, size and/or number of problematic areas, a minimum number of sensors able to see any area.

In case that a navigation route shall be planned, the future path is a section of a potential route. This section is indicated by the navigation route planning unit3.4 to the sensor limitation estimating unit 3.5. In the navigation route planning process, it is thus possible to take into consideration for any section of the entire route, the limitations that a sensor, a group of sensors or the entirety of sensors would encounter.

A similar approach is made in the pAD/AD limitation estimation unit 3.6 by using information, which is stored in a (p)AD specification 4.3, stored in memory 4, too. For calculating a route, the navigation planning unit 3.4 then receives the results from the sensor limitation estimating unit 3.5 and/or the pAD/AD limitation estimation unit 3.6 for each of the future paths. Based thereon the overall performance, availability, reliability for an entire potential route can be calculated and a route optimized according to a settable condition can be selected.

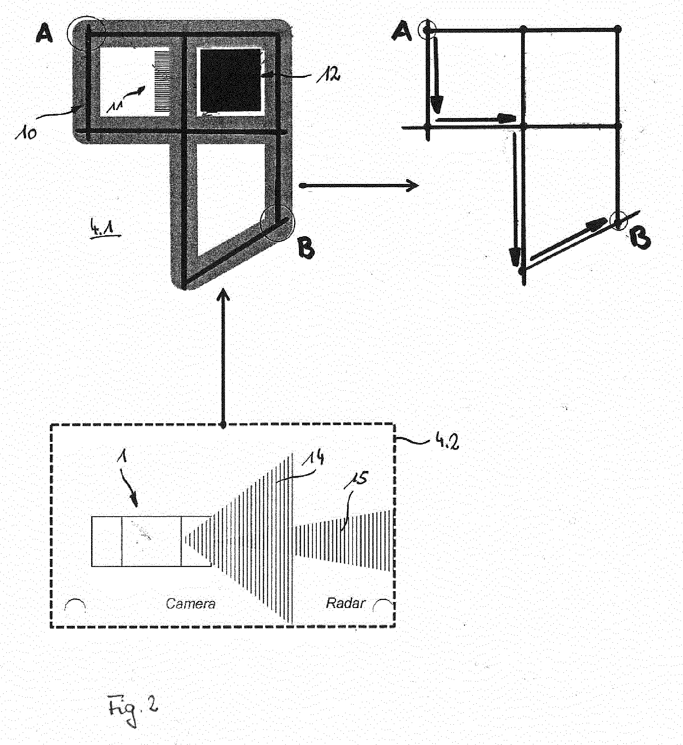

Now, turning to figure 2, the additional information that is stored in the map 4.1 and its use in order to estimate limitations for sensing of a specific sensor shall be explained. Figure 2 shows a small extract of a map, which shows a road network 10 consisting of a plurality of roads. The roads connect a starting point A (in most cases corresponding to a current position of a vehicle) and a destination B. The destination B is input by an operator of the vehicle 1 into a navigation system. In addition to the already known information on the road network 10, the map 4.1 according to the present embodiment includes information. Such additional information in the context of the invention may be any information that may have an influence on sensing that is performed by at least one of the sensors. This information by particularly be information on reflection of surfaces 11 that extend along a one of the roads, or parts thereof for example. Furthermore, in the middle of four road sections in the upper right corner of the illustrated portion of a road network 10, an object 12, which cannot be seen through by the sensor, is marked as a black square. Such an object 12 might for example be a building. It is self explaining that the illustrated additional information is only given as an example and that the map 4.1 may include other types of information as well.

In addition to the map 4.1, also the sensor setup is known as it is stored in the sensor specification 4.2 in the memory 4. As it can be seen in figure 2 easily, a first sensing area 14 is defined in the vehicle sensor setup 4.2 for the camera and a second, different sensing area 15 is defined in the sensor specification 4.2 for a radar sensor. Combining the information of the sensor specification 4.2 and the map 4.1 allows the sensor limitation estimating unit 3.5 to determine that driving on the road directly adjacent to the reflective surfaces 11 most probably would lead to a reduction in reliability of the measuring results of the radar sensor. Additionally, for the camera it can be expected that the occluding object 12 may lead to a reduced field of view and thus to a higher uncertainty whether all objects are in fact detected or could simply not be perceived due to the limitation of the sensing area 14. Thus, in the sensor limitation estimation unit 3.5, the limitations for sensing along sections determined as future paths are determined. Consequently, for an entire potential route the overall performance of a driver assistance system and/or an autonomous driving system is calculated based on quality estimates assigned to each such future path of the potential route. Thus, for the road sections surrounding the objects 12, the quality estimate will be low because of the limitation that occluding object 12 produces for the camera sensor. The road section between the reflecting surface 11 and the occluding object 12 may even have a lower quality estimate since both sensors, the camera sensor and the radar sensor, will have a reduced sensor performance because of the encountered limitations.

In the present illustrative embodiment, the finally calculated route taking into consideration the limitation of the sensor performance is indicated by the arrows in the upper right road network 10 of fig. 2. For these road sections, each of which for example corresponds to one determined future path of travel, no limitations of the sensors 2 could be estimated based on map information. Thus, it turns out that this route will provide best availability and quality of an advanced driver assistance system or may suitable for autonomous vehicle driving. The navigation route planning unit 3.4 consequently will select this indicated route even though it is longer and needs more turning maneuvers than the shortest route.

According to a preferred embodiment, it is possible for an operator of a vehicle to decide on a weighting between availability and/or performance of the driver assistance systems/autonomous driving and some user preference routing, which may be for example shortest distance, shortest duration, lowest fuel consumption and so on. Thus, the operator is capable to decide, for example by using a slider, whether availability and reliability of driver assistance or autonomous driving is more important than the user preferences, which are already known from common navigations systems. By operating the slider, the degree of influence of the quality estimate and the (p)AD limitation estimation on route planning can be set.

In the following, some examples for limitations that are encountered by sensors that might be mounted on vehicle 1 are explained.

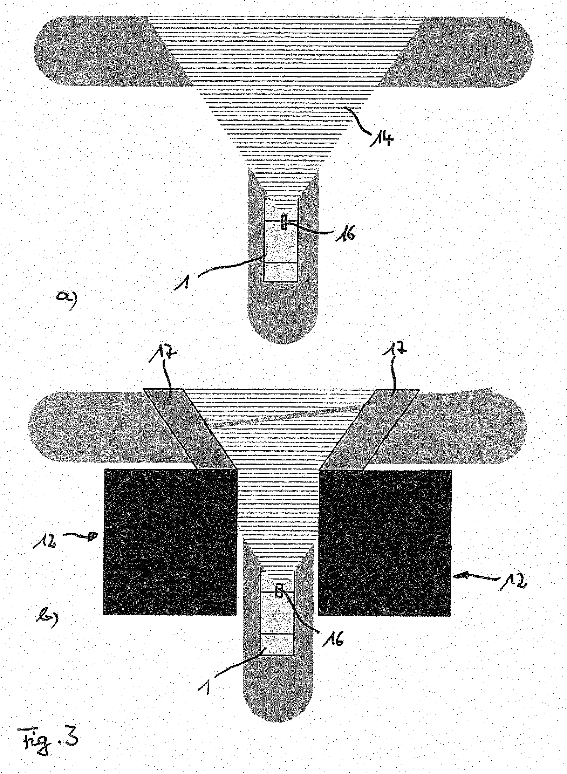

Figure 3(a) for example shows a camera sensor 16 that might be mounted on vehicle 1. As already explained with respect to figure 2, the nominal field-of-view, which is defined in the sensor specification 4.2 has a certain opening angle and a range as illustrated by area 14 of figure 3(a). In case that the camera sensor 16 is positioned between occluding objects 12, like for example buildings, which are included as information in the map 4.1 as 3-D shapes, the maximum possible field-of-view 14 cannot be sensed anymore. Instead, invisible areas 17 may exist that reduce the sensor field of view by for example 10%. This reduction by 10% may be taken for example as limitation of sensing by calculating a fraction of occluded area.

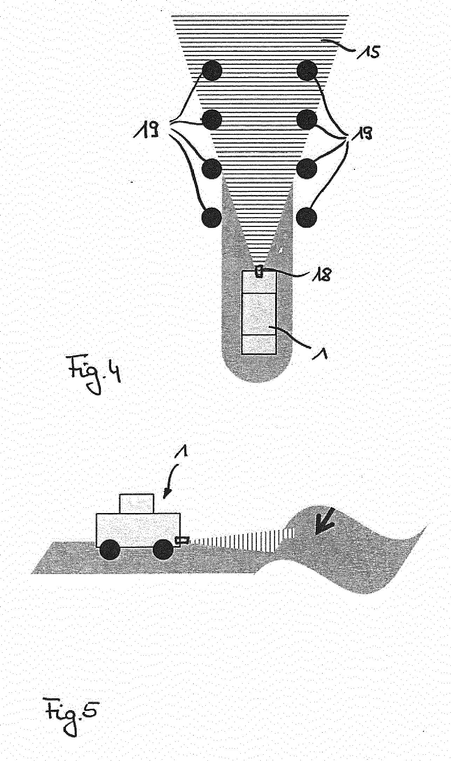

Figure 4 shows another example with respect to a radar sensor 18. The maximum field of detection is indicated by area 15 as it was already explained with respect to figure 2. In figure 4 now, there exists a plurality of poles 19 that are for example positioned alongside a road. Thus, if the radar sensor 18 moves along the road, multiple reflections from anyone of the poles 19 may cause misdetections or misinterpretations of a sensed object due to superposition of an undefined plurality of reflections. In such a case the sensor limitation may be calculated on the basis of for example the number of objects having a reflective surface or the amount of the surface in total.

Finally, in figure 5 there is shown a limitation for a LIDAR sensor because of an upcoming hill or road bump that significantly reduces the maximum range of the LIDAR sensor. In that case, a measure for the limitation could be for example the inverse of the distance between the vehicle 1 and a road bump stored in the 3D-road profile stored in the map 4.1 and being known as interfering with the sensor field of detection of a LIDAR sensor.

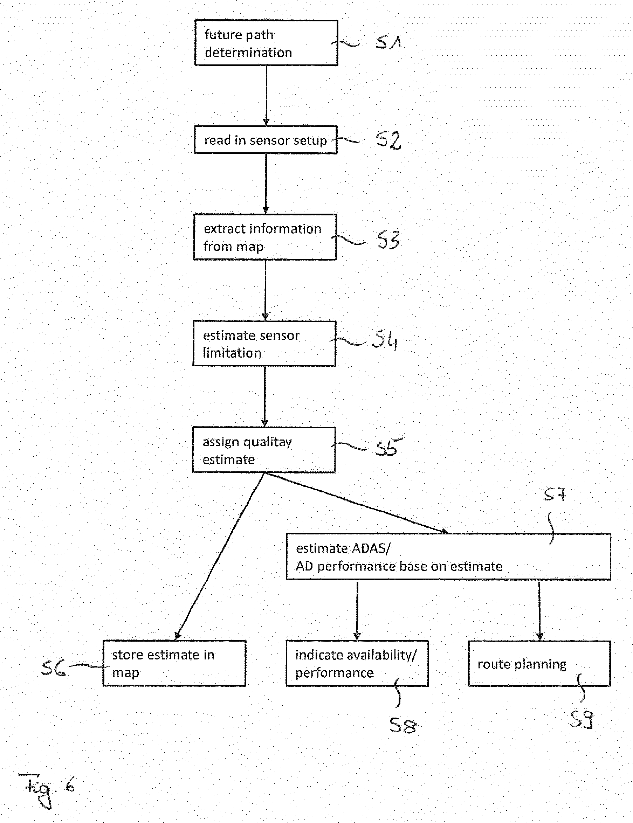

Figure 6 now illustrates in a simplified flowchart the main method steps for assigning quality estimates to a specific path and making use of it in order to determine the best route or at least indicate a degradation of a system performance to a vehicle operator. At first in step S1 a future path is determined. Such future path determination may either be a section of the road being directly ahead of the vehicle (or any future trajectory for a mobile platform in general along which the mobile platform will travel) in case that the further path of the vehicle is unknown or it might be a section of a potential route that is considered by the navigation route planning unit 3.4. Next, in step S2 the sensor setup is read in from memory 4 for at least one but preferably for all of the sensors 2 mounted on the vehicle 1 and being stored in the sensor specification 4.2. From the map 4.1 the relevant information that influences the sensing of the sensor 2 and causes the sensor limitations is extracted in step S3. Of course, only along the determined future path such extraction of relevant information is necessary. In a next step S4 the sensor performance (sensor limitation) is estimated along the determined future path. This is done either done only for some of the sensors 2, a group of sensors 2 or the entirety of sensors 2 mounted on the vehicle 1. The selection of only some of the sensors 2 may for example be based on currently operated or switched on driver assistance systems. Thus, if a vehicle driver for example switches of some of the driver assistance systems, the evaluation as described may only be performed for the sensors 2 that are used for the driver assistance systems that are still switched on.

Then, in step S5 a quality estimate is assigned to the path. Such quality estimate may either be assigned individually for each of the sensors 2 or as common quality estimate for a specific group or the entirety of sensors 2. The latter case has the disadvantage that only an overall usability of the sensors' outputs can be used to judge.

In step S6 this assigned quality estimate can be stored in the map 4.1 so that it is available for future route calculation or it can be directly read out from the map 4.1 whether a specific driver assistance system can suitably be used at the current position of the vehicle 1. Additionally in step S7 the performance of a driver assistance system/autonomous driving can be estimated based on the quality estimate. This means, that based on the quality estimate the quality of further processing in the autonomous driving unit or the advance driver assistance system can be estimated. Thus, based on the quality estimate of the sensors 2 it is also possible to directly determine and indicate the availability or performance loss of an advanced driver assistance system in step S8.

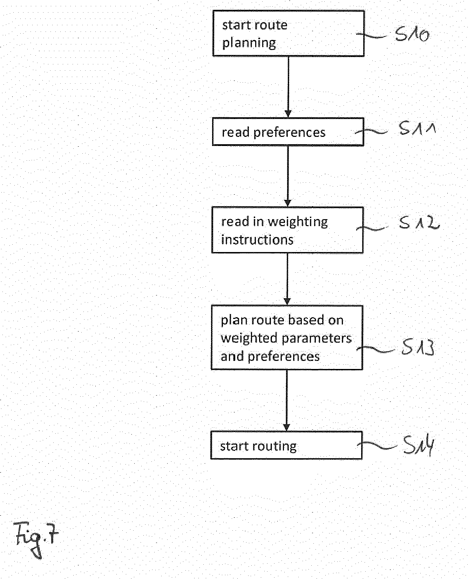

Once the quality estimate is assigned to road sections and stored in the map 4.1 or calculated online during route planning, the navigation route planning unit 3.4 can start planning a route in step S9. It is evident that the method steps up to step S7 are repeated for a plurality of different determined future paths that taken together correspond to a potential route from starting point A to destination B. The main steps of planning such a route are illustrated by using the flowchart of figure 7.

At first a destination is input by a user and the route planning is started in step S10. Routing preferences are read in from a memory or from an interface where the operator can in put a preference for each route planning process in step S11. Then, a weighting instruction is read in in step S12, which may also be input for any currently started route planning process or which may be store as a general weighting instruction for a user. The route planning algorithm will then take into consideration the limitations of the sensors 2, or the resulting performance of the autonomous driving system, in combination with the preference when calculating the route in step S13. The route which is optimized according to the weighted set preference and the weighted expected system performance is the selected and routing is started in step S14.

## Claims

1. Method for estimating quality of measuring results of one or more sensors (2) mounted on a mobile platform (1), the method comprising the following method steps:
a. Determining a future path of travel of the mobile platform (S1),
b. Determining limitations for sensing that the sensors (2) would encounter when traveling along the determined future path based on map information (S4),
c. Assigning a quality estimate to the future path indicating the quality of the measuring result (S5), and
d. Outputting the quality estimate for further processing (S6, S7).

2. Method according to claim 1,
**characterized in that**
the quality estimate is further processed by a navigation system (3.4) by basing calculation of a route on the quality estimate.

3. Method according claim 2,
**characterized in that**
in the route calculation the route is optimized with respect to at least one of the following parameters: minimal sensor limitations, expected availability of driver assistance systems and/or automated driving, expected failure probability of driver assistance systems and/or automated driving and expected quality of driver assistance systems and/or automated driving.

4. Method according to claim 3,
**characterized in that**
the optimization is based on a weighted combination of the at least one parameter and a user preference for routing.

5. Method according to any one of claims 1 to 4,
**characterized in that**
the map (4.1) includes map information on at least one of 3D environment shape, annotated labels, information on sensor perception collected by others, information on driver assistance system and/or automated driving system's performance collected during previous transition of the mobile platform (1) on at least a section of the future path.

6. Method according to any one of claims 1 to 5,
**characterized in that**
the limitations are measured as one of: fraction of occluded area within a perception range of a sensor, minimum effective sensor range over a certain angle spectrum, expected number of miss-detections, expected number of missed detection (5), signal-to-noise ratio, size and/or number of problematic areas, minimum number of sensors able to see any area.

7. Method according to claim 6,
**characterized in that**
the sensor limitations are computed by means of a machine learning method using the map information as an input.

8. Method according to any one of claims 1 to 7,
**characterized in that**
based on the output quality estimate at least one of availability, quality and failure of a driver assistance system is calculated (S7).

9. System for estimating quality of measuring results of one or more sensors mounted on a mobile platform including
one or more sensors (2) for perceiving an environment of the mobile platform (1) and a processor (3) configured to execute the method steps of any of claims 1 to 8.

10. System according to claim 9,
**characterized in that**
each of the one and more sensor (2) is one of: a camera (16), radar sensor (18), LIDAR sensor, time-of-flight sensor, ultrasonic sensor, GNSS receiver, car2X radio device.
